# EUROPÄISCHE PATENTSCHRIFT

(11) **EP 2 801 796 B1**
(45) Veröffentlichungstag und Bekanntmachung des Hinweises auf die Patenterteilung: **25.10.2017**
(21) Anmeldenummer: 14167295.6
(22) Anmeldetag: 07.05.2014
(51) Int. Cl.: G01D 11/24

(54) **Abtastkopf für einen Geber**
Scanning head
Tête de sondage

(30) Priorität: 07.05.2013 EP 13166894
(43) Veröffentlichungstag der Anmeldung: 12.11.2014
(73) Patentinhaber: Baumer Hübner GmbH, 10589 Berlin (DE)
(72) Erfinder: Hiller, Bernhard, 13465 Berlin (DE); Loharens, Axel, 13189 Berlin (DE); Pfeffer, Armin, 14513 Teltow (DE); Weiss, Michael, 13503 Berlin (DE); Steuer, Christian, 14612 Falkensee (DE)
(74) Vertreter: Strauss, Steffen

(56) Entgegenhaltungen:
- EP-A1- 0 560 381
- EP-A1- 2 660 567
- DE-A1- 10 354 458
- DE-A1-102005 056 207

## Beschreibung

Die Erfindung betrifft speziell einen Abtastkopf für einen Geber zur Erfassung von Rotations- bzw. Linearparametern, beispielsweise Position, Geschwindigkeit oder Beschleunigung, eines drehbaren oder linear bewegbaren Bauelementes, insbesondere einer Welle oder einer linearen Strecke.

Um beispielsweise die Rotationsposition eines drehbaren Bauelementes festzustellen, wird in vielen Fällen eine Maßverkörperung an dem drehbaren Bauelement angebracht, die einer Sensorfläche einer Sensoreinrichtung gegenüberliegt und die von einer Sensorfläche abgetastet wird. Neuere Systeme, wie sie beispielsweise aus der DE 10 2010 061 738.5 bekannt sind, benutzen dabei eine Maßverkörperung, die sich nicht über die kompletten 360° einer Umdrehung erstreckt und zwischen ihren Enden eine Lücke bildet. Um diese Lücke zu überbrücken, ist es notwendig, zwei oder mehr Sensorflächen, deren Abstand voneinander größer als die Lücke ist, zur Positionsermittlung zu benutzen. Auch bei anderen Messsystemen, beispielsweise bei solchen, die mit Nonius oder zusätzlichen Pseudo-Code-Spuren arbeiten, kann es notwendig sein, dass mindestens zwei in einer Umfangsrichtung des drehbaren Bauelements oder in der Verfahrrichtung eines linear bewegbaren Bauelements versetzt angeordnete Sensorflächen vorhanden sind.

Sehr große drehbare Bauelemente werden üblicherweise nur als Einzelstücke oder nur in kleinen Serien gefertigt. In solchen Fällen werden die Abtastköpfe für jeden Durchmesser des drehbaren Bauelements einzeln maßgefertigt. Dies stellt einen großen Aufwand dar.

Aus der EP 26 605 67 A1 ist ein Abtastkopf für einen Geber bekannt. Dieser umfasst ein Gehäuse und eine erste und eine zwei Sensorfläche. Die Sensorflächen sind verstellbar in dem Gehäuse angeordnet und befinden sich jeweils an einem Ende einer Sensoreinrichtung. Die Sensoreinrichtungen des Abtastkopfs befinden sich auf der Aussenseite des Sensorgehäuses
Die DE 10 2005 056 207 A1 zeigt ein Sensorsystem, welches aus einzelnen standardisierten Sensorelementen besteht. Die Sensorelemente können in Sensorgruppen zu zwei oder drei Sensorelemente zusammengefasst werden, indem diese durch eine flexibel ausgebildete Flexfolie miteinander verbunden sind.

Die Aufgabe der Erfindung ist es, einen Abtastkopf mit einem verringerten Herstellungsaufwand und einer einfachen Handhabung bereitzustellen, der zugleich weniger Platz für die Abtastung am bewegbaren Bauelement benötigt.

Die Aufgabe wird dadurch gelöst, dass ein Abtastkopf nach Anspruch 1 bereitgestellt wird, der sich an Wellen oder andere drehbare Bauelemente mit verschieden großen Durchmessern und/oder an linear bewegbare Bauelemente mit geringem Aufwand und Platzbedarf anpassen lässt.

Dazu umfasst der Abtastkopf ein Gehäuse mit einer Stirnseite, eine erste, am Gehäuse angeordnete Sensoreinrichtung mit einer ersten Sensorfläche, die zumindest teilweise in dieselbe Richtung weist wie die Stirnseite, und eine zweite, am Gehäuse versetzt angeordnete Sensoreinrichtung mit einer zweiten Sensorfläche, die ebenfalls zumindest teilweise in dieselbe Richtung weist wie die Stirnseite, wobei die erste und die zweite Sensoreinrichtung in mindestens zwei unterschiedlichen Winkelstellungen der Sensorflächen zueinander am Gehäuse anordenbar sind und die Sensorflächen der Stirnseite vorgelagert sind. Dadurch, dass die beiden Sensorflächen in verschiedenen Winkelstellungen zueinander am Gehäuse anordenbar sind, kann der Abtastkopf beispielsweise zur Abtastung von Wellen mit verschiedenen Durchmessern und/oder zur Abtastung eines linear beweglichen Bauelementes benutzt werden.

Erfindungsgemäß wird diese Aufgabe gelöst, wenn sich die Sensoreinrichtungen zwischen den Sensorflächen und der Stirnseite befinden.

Durch diese Ausgestaltung können die Sensoreinrichtungen schmaler als das Gehäuse ausgeführt sein, wobei sich gleichzeitig die Gesamtbreite des Abtastkopfes nicht vergrößert, so dass Längenänderungen des Bauelementes besser ausgeglichen werden können und dabei die Baugröße des Abtastkopfes nicht vergrößert wird.

Die Sensoreinrichtungen sind separate Bauteile , die sich vollständig vor der Stirnseite befinden. Die Ausbildung als separate Bauteile, die außerhalb des Gehäuses liegen, und sich vollständig vor der Stirnseite befinden, erlaubt eine besonders kompakte Ausgestaltung, vor allem in der Breitenrichtung. Insbesondere kann sich eine Projektion der Sensorflächen auf die Stirnseite komplett innerhalb des Querschnittes der Stirnfläche befinden. Eine solche Projektion kann insbesondere parallel zu einer Normalenrichtung der Stirnseite und/oder den Normalenrichtungen der Sensorflächen erfolgen.

Die erfindungsgemäße Lösung kann mit den folgenden, jeweils für sich vorteilhaften und beliebig miteinander kombinierbaren Weiterentwicklungen und vorteilhaften Ausgestaltungen weiter verbessert werden.

Um die mindestens zwei unterschiedlichen Winkelstellungen der Sensorflächen zu ermöglichen, sind die Sensoreinrichtungen jeweils um eine Drehachse drehbar. In einer vorteilhaften Ausgestaltung befinden sich die Drehachsen der Sensoreinrichtungen näher an den die Sensorflächen bildenden Seiten der Sensoreinrichtungen als an den Seiten, die den die Sensorflächen bildenden Seiten gegenüberliegen. Die Drehachsen der Sensoreinrichtungen können sich an den die Sensorflächen bildenden Seiten der Sensoreinrichtungen befinden. Eine solche Ausgestaltung kann eine unabhängige Erfindung darstellen, bei der die Sensoreinrichtungen nicht notwendigerweise zwischen den Sensorflächen und der Stirnseite angeordnet sein müssen. Bei dieser Ausgestaltung bewegt sich die Sensorfläche bei einer Drehung weniger stark als bei einer Ausgestaltung, bei der die Drehachse weiter von der Sensorfläche entfernt ist. Dadurch können Bewegungen entlang einer Umfangsrichtung eines drehbaren Elementes bei Anpassung an verschiedene Durchmesser minimiert werden. Insbesondere kann die Drehachse durch die Sensorfläche verlaufen und/oder in einer Ebene, die zumindest durch Teile der Sensorfläche definiert sind, liegen. Vorzugsweise kann die Drehachse in einen mittleren Bereich einer Sensorfläche liegen.

In einer weiteren vorteilhaften Ausgestaltung liegen die Drehachsen außerhalb des Gehäuses. Eine solche Ausgestaltung kann eine Bewegung der Sensorfläche in möglichst viele verschiedene Winkelstellungen ermöglichen, insbesondere auch in Winkelstellungen, die eine Innenabtastung einer Hohlwelle ermöglichen, also in eine Winkelstellung, in der die beiden Sensorflächen voneinander weg weisen.

In einer besonders vorteilhaften Ausgestaltung liegen die Drehachsen an oder vor der Stirnseite des Gehäuses. In einer Projektion auf die Stirnseite, speziell entlang einer Normalenrichtung der Stirnseite, durchkreuzen die Drehachsen die Stirnseite.

Zumindest eine der Sensoreinrichtungen kann im montierten Zustand auf einer geraden Verbindungslinie zwischen dem Gehäuse und einer Maßverkörperung des zu vermessenden Bauelementes liegen. Dadurch ist eine besonders kompakte Ausgestaltung ermöglicht.

Es kann eine auf die beiden Sensoreinrichtungen gleichzeitig einwirkende Feststelleinrichtung vorhanden sein, durch die die Winkelstellungen der beiden Sensoreinrichtungen fixierbar sind. Im Vergleich zu mehreren Feststelleinrichtungen, die jeweils nur auf eine einzige Sensoreinrichtung einwirken, ist dadurch die Bedienbarkeit erleichtert. Insbesondere kann die Feststelleinrichtung so ausgestaltet sein, dass sie einhändig bedient werden kann. Beispielsweise kann eine Fixierung durch das Festziehen einer einzigen Schraube geschehen.

Die Feststelleinrichtung kann wenigstens zwei Klemmelemente aufweisen, zwischen denen wenigstens eine der Sensoreinrichtungen angeordnet ist. Die Fixierung einer oder beider Sensoreinrichtungen kann durch Einklemmen zwischen den Klemmelementen erfolgen. Bei den Klemmelementen kann es sich beispielsweise um Klemmbacken und/oder um flächige Klemmelemente, beispielsweise um blechartige Klemmelemente handeln.

Die Sensoreinrichtungen und/oder die Klemmelemente können Aufrauungen, Riffelungen und/oder Beschichtungen mit einem hohen Reibungskoeffizienten aufweisen, um die Klemmwirkung zu verstärken. Vorzugsweise sind beide Sensoreinrichtungen zwischen den wenigstens zwei Klemmelementen angeordnet.

Der so ausgestaltete Abtastkopf ermöglicht also ohne Austausch von Teilen die Messung an mindestens zwei verschieden großen Durchmessern und/oder die Messung an einer linearen Strecke, indem die Winkelstellung der Sensorflächen je nach Bedarf eingestellt wird. Sind die Sensorflächen stärker zueinander geneigt, schließen sie einen kleineren Winkel zwischen sich ein und sind zur Messung an kleineren Durchmessern geeignet. Zur Messung an größeren Durchmessern ist der Winkel zwischen den beiden Sensorflächen größer. Soll eine lineare Strecke gemessen werden, sollten die Sensorflächen parallel und miteinander fluchtend ausgerichtet sein

Die erste und die zweite Sensorfläche können in den mindestens zwei unterschiedlichen Winkelstellungen der Sensorflächen zueinander am Gehäuse anbringbar sein, insbesondere können sie am Gehäuse befestigbar sein. Vorteilhafterweise sind sie schon am Gehäuse angebracht oder befestigt.

Der Abtastkopf kann eine Fixiereinrichtung aufweisen, die eine Fixierung von erster und zweiter Sensoreinrichtung in den mindestens zwei Winkelstellungen der Sensorflächen zueinander ermöglicht. Eine Änderung der Winkelstellung kann bei einer Fixiereinrichtung nur erfolgen, wenn die Fixiereinrichtung in einer Löseposition ist. Beispielsweise kann eine Schraube als Fixiereinrichtung dienen. Wenn die Schraube angezogen ist, kann die Sensoreinrichtung dadurch fixiert sein. Wenn die Schraube nicht angezogen ist, kann die Sensoreinrichtung bewegt werden.

Die Sensorflächen können plan sein. Alternativ können sie auch gekrümmt sein. Beispielsweise können sie leicht konvex sein, um nicht nur Messungen an Außenflächen, sondern auch an konkaven Innenflächen zu erlauben.

Die zwei Sensorflächen können in einer Ausgestaltung eine Normalenrichtung aufweisen, die senkrecht zur Rotationsachse des drehbaren Bauelementes beispielsweise der Welle verläuft. In dieser Ausgestaltung liegen die Sensorflächen bevorzugt radial beabstandet von und gegenüber einer Umfangsfläche der Welle bzw. einer Maßverkörperung eines linear bewegbaren Bauelements.

In einer anderen Ausgestaltung erfolgt die Abtastung axial, also mit axial von einer Stirnfläche des drehbaren Bauelementes beispielsweise der Welle beabstandeten bzw. der Stirnfläche gegenüberliegenden Sensorflächen. Bei dieser Ausgestaltung verläuft die Normalenrichtung der Sensorfläche parallel zur Rotationsachse des Bauelements. Die Winkelstellungen der zwei Sensorflächen unterscheiden sich wie bei der ersten Ausgestaltung in der Komponente, die tangential zur Bewegung eines Punktes auf dem drehbaren Bauelement verläuft.

In einer weiteren vorteilhaften Ausgestaltung ist die erste und/oder die zweite Sensorfläche schwenkbar am Gehäuse angeordnet, angebracht oder befestigt. Durch die schwenkbare Ausgestaltung kann die Ausrichtung der Sensorfläche in mehreren Stufen oder kontinuierlich an unterschiedliche Durchmesser des drehbaren Bauelements angepasst werden. Die Ausrichtung der Sensorflächen kann folglich so erfolgen, dass stets die maximale Sensorfläche von der vorbeibewegten Maßverkörperung erfasst wird bzw. der Luftspalt zwischen den jeweiligen Sensorflächen und der Maßverkörperung, die auf dem drehbaren Bauelement bzw. dem linearen Bauelement angebracht ist, optimal ist.

Die Sensorfläche kann Teil einer Sensoreinrichtung sein, die zusätzlich zur Sensorfläche auch weitere Elemente, wie beispielsweise Schaltkreise zur Signalbearbeitung aufweisen kann. Die Sensoreinrichtung kann schwenkbar am Gehäuse angeordnet, angebracht oder befestigt sein.

Die erste und/oder die zweite Sensorfläche können mittelbar oder unmittelbar schwenkbar am Gehäuse angeordnet, angebracht oder befestigt sein. Eine mittelbare Anordnung wäre beispielsweise eine Anordnung über ein zwischen dem Gehäuse und der Sensorfläche liegendes drittes Element.

In einer weiteren vorteilhaften Ausgestaltung ist eine der beiden Sensorflächen, beispielsweise die erste Sensorfläche unbeweglich am Gehäuse befestigt und die andere Sensorfläche, in diesem Beispiel die zweite Sensorfläche, beweglich angeordnet, z.B. schwenkbar am Gehäuse befestigt. Diese Ausgestaltung ist im Vergleich zur Ausgestaltung mit zwei schwenkbaren oder zwei beweglichen Sensorflächen einfacher zu fertigen.

Die Sensorflächen und/oder Sensoreinrichtung können unabhängig voneinander schwenkbar sein, so dass jede Sensorfläche für sich lageoptimiert werden kann.

In einer weiteren Ausgestaltung sind die erste und die zweite Sensorfläche schwenkbar miteinander gekoppelt. Die Anpassung der Sensorflächen an verschiedene Durchmesser ist dabei besonders einfach, da nur die eine oder die andere Sensorfläche eingestellt werden muss und die andere Sensorfläche automatisch richtig mitjustiert wird. Eine solche Ausgestaltung erfordert jedoch einen verhältnismäßig hohen Aufwand.

Der Abtastkopf kann, abgesehen von einem Anschlusselement, im Wesentlichen eine zweizählige Rotationssymmetrie aufweisen. Eine solche zweizählige Rotationssymmetrie, bei der bei einer Rotation des Abtastkopfes um 180° der Abtastkopf auf sich selbst abgebildet wird, hat den Vorteil, dass der Abtastkopf in zwei verschiedenen Rotationspositionen montiert werden kann. Beispielsweise muss der Monteur dadurch nicht mehr auf die richtige Ausrichtung des Abtastkopfes achten.

Die Sensoreinrichtungen und/oder das Gehäuse und/oder die Klemmelemente können Ausrichthilfen in Form von außen einsehbaren Markierungen aufweisen, wobei jede Markierung einer vorbestimmten Winkelstellung der Sensoreinrichtungen zugeordnet ist. Eine solche Ausgestaltung kann es erlauben, den Abtastkopf schon vor der Montage auf eine bestimmte Winkelstellung, die etwa von einem Durchmesser eines abzutastenden Elementes abhängt, einzustellen. Die Einstellung kann etwa schon im Werk oder kurz vor der Montage erfolgen und muss nicht in den beengten Verhältnissen bei schon montiertem Abtastkopf erfolgen.

Die Sensoreinrichtungen können an einer Blattfeder angeordnet sein, die an mindestens zwei Befestigungsstellen am Gehäuse befestigt ist. Durch die zwei Befestigungsstellen kann eine stabile Befestigung am Gehäuse ermöglicht sein. Aufgrund der elastischen Eigenschaften der Blattfeder liegen die Sensoreinrichtungen trotzdem an einem definierten Ort.

Die Blattfeder kann an ihren Enden und an ihrer Mitte am Gehäuse befestigt sein, wobei je eine Sensoreinrichtung zwischen einem Ende und der Mitte angeordnet ist. Dies ermöglicht eine besonders stabile Ausgestaltung, bei der die beiden Sensoreinrichtungen voneinander unabhängig sind.

Die Blattfeder kann in verschiedenen durchgebogenen Stellungen fixierbar am Gehäuse befestigt sein. Beispielsweise kann an einer oder an zwei Befestigungsstellen eine Verstellung der Sensoreinrichtung bezüglich eines Winkels oder bezüglich eines Abstandes vom Gehäuse ermöglicht sein. Dies kann etwa durch langlochförmige Ausnehmungen in der Blattfeder oder durch variable Befestigung an verschiedenen Stellen am Gehäuse ermöglicht sein.

Die beiden Sensoreinrichtungen können bei gleicher Winkelstellung in mindestens zwei verschiedenen radialen Abständen vom Gehäuse angeordnet sein. Bei einer Ausgestaltung mit einer Blattfeder kann beispielsweise die Befestigung in der Mitte und an den Enden der Blattfeder so verstellbar sein, dass die Sensoreinrichtung bei gleicher Winkelstellung verschiedene Abstände vom Gehäuse aufweist. Dadurch ist beispielsweise eine Anpassung in einer radialen Richtung bei einem abzutastenden drehbaren Element möglich.

Ein elektrisches Anschlusselement kann mit einem schräg von der Stirnseite weg weisenden Steckergesicht versehen sein. Ein solches Anschlusselement kann etwa schräg zu einer Mittelebene des Körpers verlaufen. Eine solche Ausgestaltung ist platzsparender als beispielsweise eine Ausgestaltung, bei der das Steckergesicht senkrecht zu der Stirnseite und/oder der Mittelebene verläuft.

Wie eingangs beispielhaft beschrieben, ist bei einigen Messsystemen die Verwendung von zwei Sensoreinrichtungen notwendig, um eine Lücke zwischen zwei Abschnitten der Maßverkörperung zu überbrücken. In diesem Fall sollte der Abstand zwischen den beiden Sensoreinrichtungen größer als die Lücke sein, so dass im Bereich der Lücke stets zumindest eine Sensoreinrichtung noch die Maßverkörperung abtastet. Bei anderen Messsystemen werden beide Sensoreinrichtungen immer gleichzeitig benutzt und die Positionsinformation aus der Kombination der beiden Sensoren gewonnen. Bei solchen Systemen kann es notwendig sein, dass der Abstand der beiden Sensoreinrichtungen entlang der Maßverkörperung einen vorbestimmten Wert aufweist. Dies ist der Fall, wenn mit Hilfe der beiden Sensoreinrichtungen zwei Signale durch die Abtastung der einen Verkörperung erzeugt werden sollen, die um einen bestimmten Phasenwinkel zueinander versetzt sind. Da sich bei verschiedenen Winkelstellungen die Abstände zwischen den Sensoreinrichtungen unterscheiden können, ist es besonders vorteilhaft, wenn sich die Sensoreinrichtungen in unterschiedlichem Abstand voneinander anordnen, anbringen oder befestigen lassen. Dadurch kann der Abstand in den verschiedenen Winkelstellungen richtig eingestellt werden.

Vorteilhafterweise ist nicht nur die Anordnung von erster und zweiter Sensorfläche in zwei unterschiedlichen Winkelstellungen, sondern in einer beliebigen Winkelstellung innerhalb eines kontinuierlichen Bereichs möglich. Dadurch kann der Abtastkopf nicht nur für zwei unterschiedliche Durchmesser, sondern für Durchmesser in einem kontinuierlichen Bereich verwendet werden.

Bei den Sensoreinrichtungen kann es sich um kontaktlos messende Sensoreinrichtungen handeln. Als Messverfahren können beispielsweise induktive, kapazitive, magnetische und/oder optische Verfahren zum Einsatz kommen. Die kontaktlose Messung verursacht weniger Verschleiß als eine Messung mit einem direkten Kontakt. In einer besonders vorteilhaften Ausgestaltung sind die Sensoreinrichtungen magnetisch messende Sensoreinrichtungen.

Neben der ersten und der zweiten Sensoreinrichtung kann noch eine dritte Sensoreinrichtung mit einer dritten Sensorfläche vorgesehen sein, um die Messung zu verbessern. Die dritte Sensorfläche muss dabei nicht bewegbar oder schwenkbar am Gehäuse angeordnet sein, was den Fertigungsaufwand verringert und den Justiervorgang beim Montieren des Abtastkopfes erleichtert. Die dritte Sensorfläche kann sich beispielsweise zwischen der ersten und der zweiten Sensorfläche befinden.

Um nicht nur die Rotation von Wellen, sondern auch eine lineare Bewegung messen zu können, ist es vorteilhaft, wenn die Sensorflächen in eine erste Winkelstellung überführbar sind, in der sie miteinander fluchten. In der ersten Winkelstellung liegen die beiden Sensorflächen in einer Ebene und parallel zueinander, so dass eine gerade beziehungsweise plane Maßverkörperung, wie sie beispielsweise an einem linear bewegbaren Bauelement angebracht sein kann, abgetastet werden kann. Die Sensorflächen können ferner in eine zweite Winkelstellung überführbar sein, in der sie nicht miteinander fluchten, so dass die Messung an beispielsweise einer Welle oder einem anderen Rotationskörper möglich ist.

Die zwei Sensoreinheiten können dieselbe Maßverkörperung abtasten. Dazu können die erste und die zweite Sensorfläche auf der gleichen, entlang einer Axialrichtung gemessenen Höhe liegen. Alternativ können die erste Sensorfläche und die zweite Sensorfläche verschiedene Maßverkörperungen abtasten, beispielsweise eine grob aufgelöste Maßverkörperung und eine fein aufgelöste Maßverkörperung.

Der Abtastkopf kann eine Signalverarbeitungselektronik umfassen, die die Signale der Sensoreinrichtungen aufnimmt und zumindest teilweise weiterverarbeitet. Aufbereitete Informationen können dann mit einer einzigen Datenleitung weitergegeben werden.

Im Folgenden ist die Erfindung anhand von Ausführungsbeispielen mit Bezug auf die Zeichnungen näher erläutert. Die bei den einzelnen Ausführungsbeispielen unterschiedlichen Merkmale können nach Maßgabe der obigen Ausführungen miteinander kombiniert werden. Außerdem können nach Maßgabe der obigen Darstellung auch einzelne Merkmale bei den Ausführungsbeispielen weggelassen werden, sollte es im speziellen Anwendungsfall auf den mit diesem Merkmal verbundenen Vorteil nicht ankommen.

Es zeigen:
- Fig. 1: eine schematische Perspektivansicht von Teilen eines erfindungsgemäßen Abtastkopfes;
- Fig. 2: eine schematische Perspektivansicht des Abtastkopfes aus Fig. 1 eingestellt auf eine Außenabtastung einer Welle;
- Fig. 3: eine schematische Perspektivansicht des Abtastkopfes aus Fig. 2, eingestellt auf eine Innenabtastung einer Hohlwelle;
- Fig. 4: eine schematische Perspektivansicht des Abtastkopfes aus den Figuren 1 bis 3;
- Fig. 5: eine schematische Ansicht von oben auf den Abtastkopf aus den Figuren 1 bis 4;
- Fig. 6: eine schematische Perspektivansicht zweier Abtastköpfe gemäß den Figuren 1 bis 6, die eine Maßverkörperung außen bzw. innen abtasten;
- Fig. 7: eine schematische Perspektivansicht einer weiteren Ausführungsform eines Abtastkopfes, eingestellt auf eine Außenabtastung einer Welle;
- Fig. 8: eine schematische Perspektivansicht des Abtastkopfes aus Fig. 7, eingestellt auf eine Innenabtastung einer Hohlwelle;
- Fig. 9: eine schematische Perspektivansicht eines weiteren Abtastkopfes.

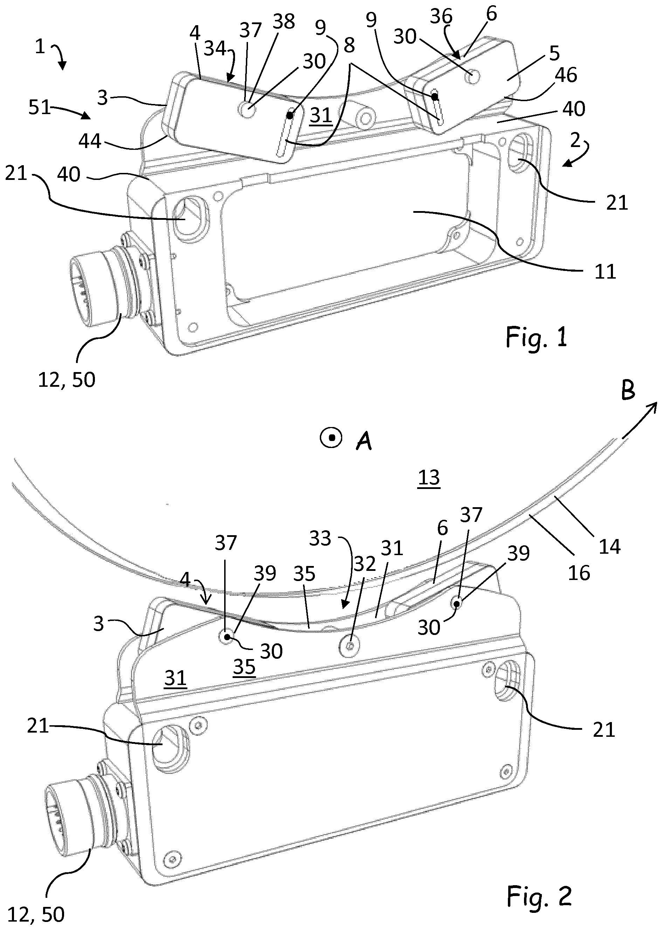

Fig. 1 zeigt eine schematische Ansicht eines Abtastkopfes 1 mit einem Gehäuse 2 sowie einer ersten, am Gehäuse 2 angeordneten Sensoreinrichtung 3 mit einer ersten Sensorfläche 4 und einer zweiten, am Gehäuse 2 angeordneten, in einer Umfangsrichtung U einer Welle oder eines anderen drehbaren Bauteils (nicht gezeigt) zur ersten Sensoreinrichtung 3 versetzt angeordneten Sensoreinrichtung 5 mit einer zweiten Sensorfläche 6. Die beiden Sensoreinrichtungen 4, 6 sind zur Außenabtastung einer Welle 13 eingestellt. Sie weisen aufeinander zu.

Die beiden Sensorflächen 4, 6 liegen zur Bestimmung der Winkelposition einer Maßverkörperung gegenüber und tasten diese ab. Eine Sensorfläche 4, 6 kann eine Vorzugsrichtung definieren, entlang der die Messung besonders effizient ist. Eine solche Vorzugsrichtung kann etwa senkrecht zur Ausdehnung der Sensorfläche 4, 6 sein. Die beiden Sensorflächen 4, 6 sind in Umfangsrichtung zueinander versetzt und so zueinander geneigt, dass die jeweilige Vorzugsrichtung auf die Rotationsachse des drehbaren Bauelement gerichtet ist. Um eine Messung an drehbaren Bauelementen mit verschiedenen Durchmessern und/oder an einem linear bewegbaren Bauelement zu ermöglichen, lassen sich die Sensorflächen 4, 6 in mindestens zwei Winkelstellungen zueinander anordnen.

Die erste und die zweite Sensoreinrichtung 3, 5 sind jeweils über eine Achse 30 schwenkbar am Gehäuse 2 befestigt. Die optionalen schlitzförmigen Ausnehmungen 8 an den Sensoreinrichtungen 3, 5 ermöglichen dabei, dass die Sensoreinrichtungen 3, 5 innerhalb eines kontinuierlichen Bereichs geführt schwenkbar sind. Jede der beiden Sensoreinrichtungen 3, 5 verfügt über eine Fixiereinrichtung 9 beispielsweise in Form einer Schraube, die durch die schlitzförmige Ausnehmung 8 ragt und die Sensoreinrichtung 3 beziehungsweise 5 fixiert. Der hier gezeigte Abtastkopf 1 ermöglicht also eine Fixierung von erster und zweiter Sensorfläche 4, 6 unabhängig voneinander in einer beliebigen Winkelstellung zueinander innerhalb eines kontinuierlichen Bereichs. Der so ausgestaltete Abtastkopf 1 kann an verschiedene Wellendurchmesser angepasst werden. Alternativ zur dargestellten Ausgestaltung könnten schlitzförmige Ausnehmungen am Gehäuse 2 vorhanden sein, um eine Verschwenkung zu ermöglichen.

Die beiden Sensoreinrichtungen 3, 5 verfügen neben den Sensorflächen 4, 6 noch jeweils über eine Sensorelektronik (nicht gezeigt) im Inneren der Sensoreinrichtung 3, 5. Die Sensoreinrichtungen 3, 5 sind mit Verbindungselementen mit einer Signalverarbeitungselektronik (nicht gezeigt) in einem Hohlraum 11 des Abtastkopfes 1 verbunden. Diese Signalverarbeitungselektronik kann beispielsweise dazu dienen, die Sensorsignale weiter zu verarbeiten und schon ein fertiges Positionssignal, und/oder Geschwindigkeitssignale und/oder Beschleunigungssignal auszugeben, das über den Ausgang 12 ausgegeben wird.

In Fig. 2 ist ein Abtastkopf 1 zusammen mit einem Spannband 14 gezeigt. Das Spannband 14 wird mittels eines Spannschlosses (nicht gezeigt) auf eine Welle 13 gespannt, wodurch es fest am Umfang der Welle 13 anliegt. Außerhalb des Bereichs des Spannschlosses verfügt das Spannband 14 über eine Maßverkörperung 16. In diesem Fall handelt es sich um eine magnetische Maßverkörperung 16, die von den magnetisch messenden Sensoreinrichtungen 3, 5 erfasst wird. Um die durch das Spannschloss verursachte, zum Spannen notwendige Lücke zwischen den Bereichen mit der Maßverkörperung zu überbrücken, verfügt der Abtastkopf 1 über zwei Sensoreinrichtungen 3, 5, sodass immer mindestens eine Sensoreinrichtung 3, 5 die Maßverkörperung 16 erfassen und messen kann.

Die zur Welle 13 hin zeigenden Außenflächen der Sensoreinrichtungen 3, 5 und die zur Welle 13 hin zeigende Außenfläche des Abtastkopfes 1 sind leicht konvex ausgestaltet, so dass eine Anbringung an verschieden großen Wellen möglich ist. Durch die konvexe Ausgestaltung ist es zusätzlich möglich, die Sensorflächen 4, 6 so anzuordnen, dass sie miteinander fluchten, wodurch nicht nur die Rotationsbewegung einer Welle, sondern auch eine lineare Bewegung einer ebenen Fläche erfasst werden kann. Sogar die Anbringung im Inneren einer großen Hohlwelle ist durch diese Ausgestaltung möglich.

Zur Befestigung und zur Justierung des Abtastkopfes 1 verfügt dieser über zwei Langlöcher 21, in die Befestigungselemente, beispielsweise Schrauben, einführbar sind.

Bei manchen Messmethoden kann es notwendig sein, dass zwischen der ersten Sensorfläche 4 und der zweiten Sensorfläche 6 ein bestimmter Abstand entlang der Umfangsrichtung U besteht. In einer vorteilhaften Ausgestaltung lässt sich daher der Abstand der beiden Sensorflächen 4, 6 verstellen, beispielsweise indem die Sensoreinheiten in unterschiedlichem Abstand voneinander anordenbar, anbringbar oder befestigbar ausgestaltet sind.

Die in den Fig. 1 bis 4 gezeigten Sensoreinrichtungen 3, 5 sind unabhängig voneinander schwenkbar. Dadurch ist es möglich, dass der Abtastkopf 1 relativ zur Welle 13 in einem vergleichsweise breiten Bereich anordenbar ist. In der Fig. 2 könnte der Abtastkopf 1 auch weiter links oder weiter rechts angeordnet sein. Um diesen Versatz auszugleichen, müsste eine der beiden Sensoreinrichtungen 3 oder 5 und damit die eine Sensorfläche 4 oder 6 weiter nach innen und die andere Sensoreinheit 5 bzw. 3 mit der anderen Sensorfläche 6 bzw. 4 weiter nach außen verschwenkt werden.

Alternativ könnten die beiden Sensoreinrichtungen 3, 5 und damit die beiden Sensorflächen 4, 6 schwenkbar miteinander gekoppelt sein, beispielsweise über ein Getriebe (nicht gezeigt) oder über Einzelantriebe. Eine solche Ausgestaltung würde die Anpassung an den Wellendurchmesser vereinfachen, da nur eine Sensoreinrichtung 3 oder 5 justiert werden müsste und die andere Sensoreinrichtung 5 bzw. 3 automatisch richtig mitjustiert werden würde. Allerdings wäre es dazu notwendig, dass die Relativposition zwischen dem Abtastkopf 1 und der Welle 13 vergleichsweise genau festgelegt ist.

Bei dem in Fig. 1 dargestellten Abtastkopf 1 mit einem Gehäuse 2 sind Teile zur besseren Sichtbarkeit der Funktionsweise entfernt dargestellt. Die erste Sensorfläche 4 und die zweite Sensorfläche 6 weisen zumindest teilweise in dieselbe Richtung wie eine Stirnfläche 40 des Gehäuses 2, d.h. die Normalenrichtungen der Sensorflächen 4 und 6 weisen Komponenten auf, die parallel zur Oberflächennormale der Stirnseite 40 sind. Die beiden Sensorflächen 4, 6 und die Stirnseite 40 weisen jeweils vom Gehäuse 2 aus nach außen. Die Sensorflächen 4, 6 sind der Stirnseite 40 dabei vorgelagert. Sie befinden sich weiter außen als die Stirnseite 40. Die Sensoreinrichtungen 3, 5 befinden sich zwischen den Sensorflächen 4, 6 und der Stirnseite 40. Dadurch ist eine schmale Ausgestaltung im Bereich der Sensorflächen 4, 6 möglich, da die Sensoreinrichtungen 3, 5 außerhalb des Gehäuses 2 liegen und dadurch die Breite des Abtastkopfes 1, gemessen entlang einer Breitenrichtung W im Bereich der Sensorflächen 4, 6 kleiner sein kann als im Bereich des Gehäuses 2. Dies erlaubt eine größere Toleranz im vorderen/äußeren Bereich 51. Beispielsweise können dadurch Bewegungen oder Lage-/Längenänderungen des zu messenden Bauelementes, die beispielsweise aufgrund von temperaturabhängigen Ausdehnungen entstehen, besser toleriert werden.

Die Sensoreinrichtungen 3, 5 sind jeweils um Drehachsen 30 drehbar, die durch Achsen 37 verlaufen. Die Achsen 37 werden von Vorsprüngen 38 an den Sensoreinrichtungen 3, 5 gebildet, die in Löchern 39 an den seitlichen Blechen 31 angeordnet sind (siehe Fig. 2). Die Drehachsen 30 befinden sich an den die Sensorflächen 4, 6 bildenden Seiten 34, 36 der Sensoreinrichtungen 3, 5. Die Drehachsen 30 befinden sich also näher an den die Sensorflächen 4, 6 bildenden Seiten 34, 36 der Sensoreinrichtungen 3, 5 als an den Sensorflächen 4, 6 gegenüberliegenden Seiten 44, 46. Insbesondere befinden sie sich mittig bezüglich der Sensorflächen 4, 6. Aufgrund dieser Ausgestaltung ist eine Änderung des Abstandes der Sensorflächen 4, 6 zueinander bei einer Veränderung der Winkelstellung zueinander minimiert.

Auch die Tatsache, dass die Drehachsen 30 außerhalb des Gehäuses, insbesondere vor der Stirnseite 40 des Gehäuses 2 liegen, trägt dazu bei, dass die Anpassung an verschiedene Wellendurchmesser besonders einfach ist.

Die Sensoreinrichtungen 3, 5 sind jeweils als separate Bauelemente ausgebildet und befinden sich vollständig vor der Stirnseite 40 des Gehäuses 2.

In Fig. 2 ist der Abtastkopf aus Fig. 1 im vollständig montierten Zustand, d.h. ohne die in Fig. 1 fehlenden Teile dargestellt.

Die beiden Sensoreinrichtungen 3, 5 sind zwischen zwei seitlichen Blechen 31 angebracht, die zusammen mit einer anziehbaren Schraube 32 als Feststelleinrichtung 33 dienen, mit der die Winkelstellungen der beiden Sensoreinrichtungen 3, 5 gleichzeitig fixierbar sind. Die hier gezeigte Feststelleinrichtung 33 ist also einhändig bedienbar. Die beiden seitlichen Bleche 31 wirken als Klemmelemente 35, zwischen denen die Sensoreinrichtungen 3, 5 angeordnet sind und mit dem die Sensoreinrichtungen 3, 5 geklemmt werden können.

Die Löcher 39, die die Achsen 37 aufnehmen und damit als Lager für eine Drehung um die Drehachse 30 dienen, sind an den äußeren Enden der seitlichen Bleche 31 angeordnet. In diesem Bereich ragen die seitlichen Bleche 31 bezüglich einer Höhenrichtung H am weitesten vom Gehäuse 2 hervor. Zwischen den Löchern 39 weisen die seitlichen Bleche 31 eine konkave Form auf, um bei einer Außenabtastung die Welle möglichst gut aufnehmen zu können. Seitlich nach außen hin ragen die Bleche 31 weniger weit vom Gehäuse 2 ab, um bei einer Innenabtastung einer Hohlwelle eine möglichst nahe Platzierung des Abtastkopfes 1 an der inneren Oberfläche der Hohlwelle zu ermöglichen.

Die Messung in Fig. 1 erfolgt tangential. Die beiden Sensorflächen 4, 6 erstrecken sich in einer Richtung, die tangential zur Bewegungsrichtung B der Rotation eines Punktes auf der Außenfläche der Welle 13 verläuft. Zusätzlich erstrecken sich die Sensorflächen 4, 6 in einer Richtung, die parallel zur Axialrichtung A der Welle 13 verläuft. In den verschiedenen Winkelstellungen weisen die Sensorflächen verschieden große Zwischenwinkel auf. Bei Messung an einer Welle fluchten die beiden Sensorflächen also nicht.

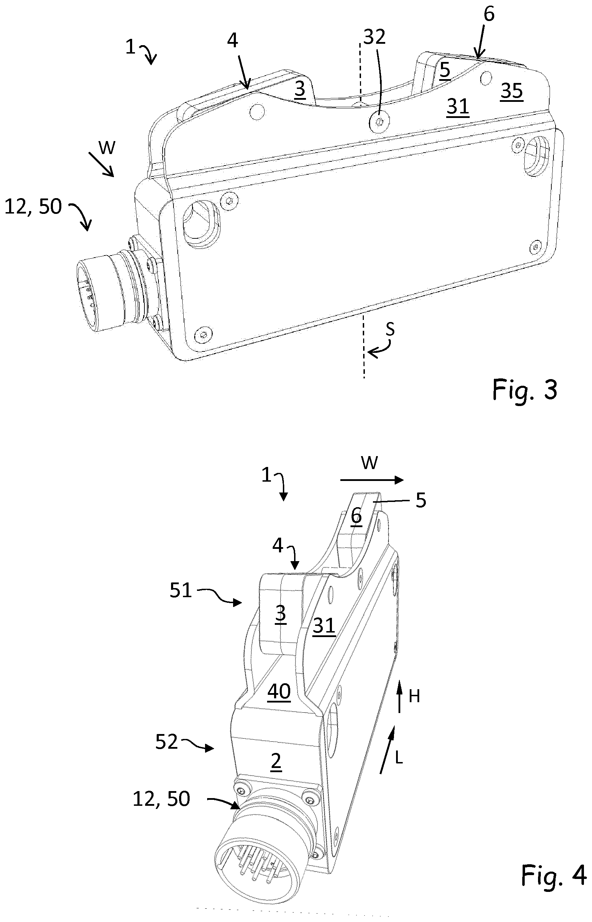

In Fig. 3 ist eine Einstellung der Sensoreinrichtungen 3, 5 dargestellt, mit der eine Innenabtastung einer Hohlwelle möglich ist. Die Sensorflächen 4, 6 weisen dabei voneinander weg. Durch die konvexe Ausgestaltung der Außenfläche des Abtastkopfes 1 ist es möglich, auch an einer Innenfläche der Hohlwelle zu messen. Dazu werden die Sensorflächen 4, 6 zum Rest des Abtastkopfes 1 hin verschwenkt. Bei der in Fig. 3 dargestellten Messung handelt es sich, wie bei der Messung in den Fig. 1, um eine tangentiale Messung.

Um einen möglichst sicheren Halt der Sensoreinrichtungen 3, 5 zu gewährleisten, können die Sensoreinrichtungen 3, 5 und/oder die Klemmelemente 35 Aufrauungen, Riffelungen oder Beschichtungen mit einem hohen Reibungskoeffizienten aufweisen.

Wie auch die anderen Abtastköpfe 1, weist der Abtastkopf 1 aus Fig. 3, abgesehen von einem elektrischen Anschlusselement 50, eine zweizählige Rotationssymmetrie auf. Eine Rotation um eine Symmetrieachse S um 180° bildet den Abtastkopf 1 wieder auf sich selbst ab. Die Sensoreinrichtungen 3, 5 werden dabei vertauscht, d.h. sie wechseln ihre Plätze. Die Symmetrieachse S verläuft dabei mittig durch den Abtastkopf 1 und durch die anziehbare Schraube 32. Sie verläuft von einer Seite, die der Welle zugewandt ist, zu einer Seite, die der Welle abgewandt ist, wenn der Abtastkopf 1 zur Messung an der Welle angebracht ist. Eine solche symmetrische Ausgestaltung führt dazu, dass der Abtastkopf in zwei verschiedenen Orientierungen montiert werden kann und der Monteur bei der Montage nicht mehr auf die korrekte Orientierung achten muss. Nichtsdestotrotz muss natürlich die Auswertesoftware, die die vom Abtastkopf 1 kommenden Signale auswertet, so ausgestaltet sein, dass sie verschiedene Montageorientierungen toleriert.

Eine in einem äußeren Bereich 51 gemessene Dicke D1 des Abtastkopfes 1, die in einer Breitenrichtung W gemessen wird, ist kleiner als eine in einem inneren Bereich 52 gemessene Dicke D2 des Abtastkopfes 1. Der äußeren Bereich 51 liegt dabei auf der Seite, auf der die Sensoreinrichtungen 3, 5 liegen.

Zusätzlich zu den in den Figuren gezeigten zwei Sensoreinrichtungen 3, 5 können noch weitere Sensoreinrichtungen vorhanden sein. Beispielsweise kann eine dritte Sensoreinrichtung vorhanden sein, die relativ zum Rest des Abtastkopfes unbeweglich ist. Diese könnte sich beispielsweise zwischen den beiden Sensorflächen 4, 6 befinden.

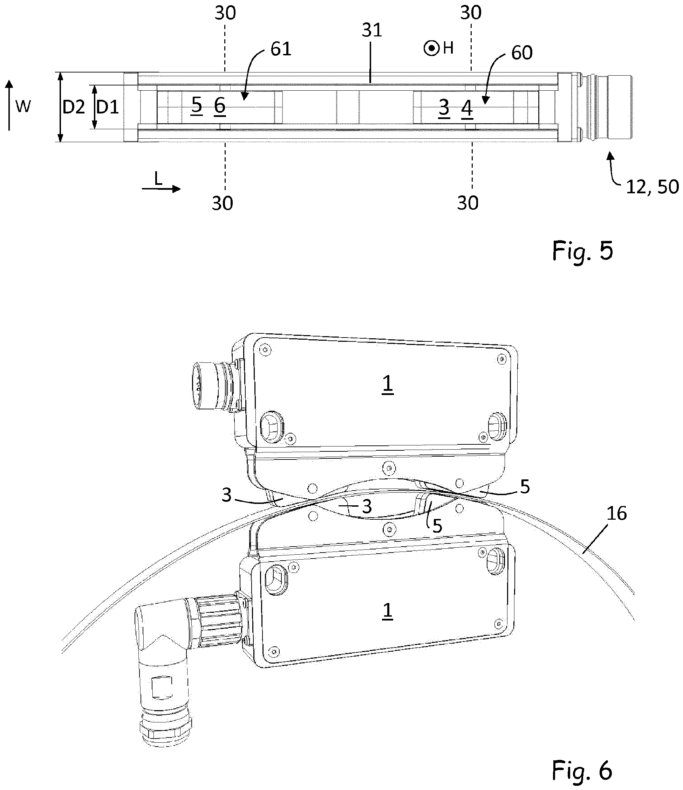

In Fig. 5 ist die schmalere Ausgestaltung am äußeren Bereich 51 in einer Draufsicht gut zu erkennen. Die Draufsicht zeigt dabei die Ansicht entlang einer Höhenrichtung H, wobei die Höhenrichtung H senkrecht zur Längsrichtung L und senkrecht zur Breitenrichtung W verläuft. In der Breitenrichtung W hat der Abtastkopf 1 eine geringere Ausdehnung als in der Längsrichtung L und als in der Höhenrichtung H.

Zu erkennen ist in Fig. 5 auch, dass sich der Abstand der Mittenbereiche 60, 61 der Sensorflächen 4, 6 bei einer Drehung der Sensoreinrichtungen 3, 5 um die Drehachsen 30 kaum verändert.

In Fig. 6 sind zwei Abtastköpfe 1 gezeigt, wobei ein Abtastkopf 1 eine Maßverkörperung 16 außen abtastet und der andere Abtastkopf 1 die Maßverkörperung 16 innen abtastet. Dies zeigt, dass der gleiche Abtastkopf 1 durch Rotation der Sensoreinrichtungen 3, 5 zur Abtastung sowohl von innen, als auch von außen nutzbar ist.

Zusätzlich zu der zweizähligen Rotationssymmetrie um die Achse S, die durch die in der Mitte angeordnete Schraube entlang der Höhenrichtung H verläuft, weist der Abtastkopf 1, wie auch die anderen Abtastköpfe, eine Spiegelsymmetrie bezüglich einer Ebene, die parallel zu der durch die Höhenrichtung H und die Längsrichtung L definierte Ebene verläuft und mittig durch das Gehäuse geht. Dadurch wird erreicht, dass bei einer Rotation um die Längsrichtung L, wie sie beispielsweise bei den zwei Abtastköpfen in Fig. 6 stattgefunden hat, kein Versatz der Sensoreinrichtungen 3, 5 entlang der Breitenrichtung W auftritt.

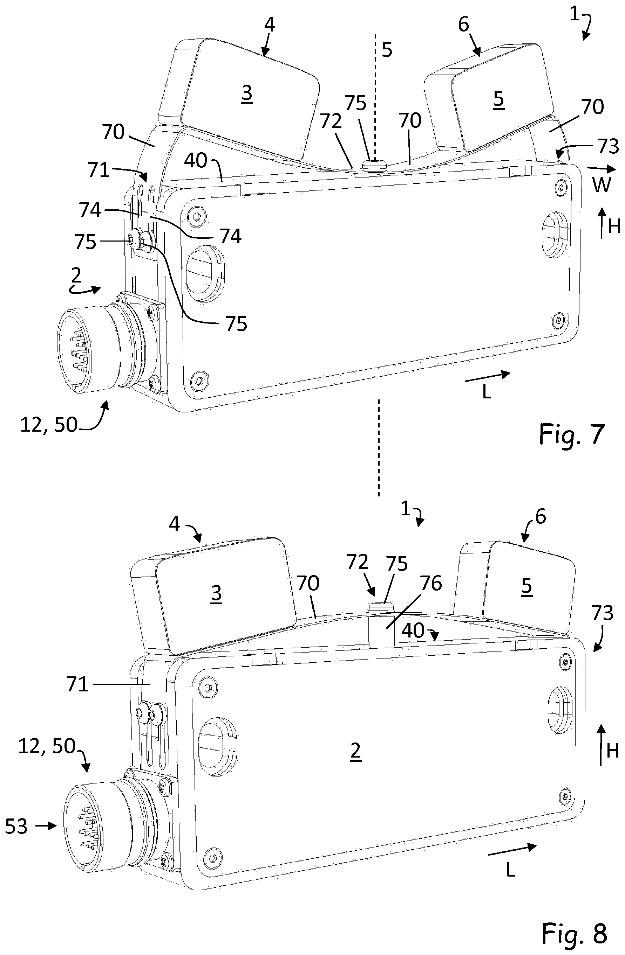

In Fig. 7 ist eine weitere Ausgestaltung eines Abtastkopfes 1 gezeigt. Der gezeigte Abtastkopf 1 ist zur Abtastung einer Außenfläche einer Welle eingestellt.

Der Abtastkopf 1 weist eine Blattfeder 70 auf. Auf der Blattfeder 70 sind die beiden Sensoreinrichtungen 3, 5 befestigt. Die Blattfeder 70 ist an ihren Enden 71, 73 am Gehäuse 2 befestigt. Diese Befestigung ist dabei variabel. An jedem Ende sind zwei Langlöcher 74 in der Blattfeder 70 vorhanden, so dass die Enden 71, 73 in der Höhenrichtung H variabel am Gehäuse 2 befestigt werden können. Die Befestigung erfolgt hierbei über Schrauben 75, die die Blattfeder 70 zwischen dem Schraubenkopf und dem Gehäuse 2 einklemmen. Dadurch erfolgt eine Einstellung der Winkelstellung der Sensorflächen 4, 6 zueinander. Gleichzeitig verändert sich dabei der Abstand der Sensoreinrichtungen 3, 5 vom Gehäuse 2 in der Höhenrichtung H. Um die gleiche Winkelstellung der beiden Sensorflächen 4, 6 zueinander bei verschiedenen Höhen der Sensoreinrichtungen 3, 5 zu ermöglichen, kann dabei die Befestigung der Blattfeder 70 am Gehäuse 2 im Bereich der Mitte 72 der Blattfeder 70 in Höhenrichtung H variabel sein. Beispielsweise können gleiche Winkelstellungen erreicht werden, wenn die Befestigung der Blattfeder 70 an den Enden 71, 73 und an der Mitte 72 um jeweils den gleichen Betrag in der Höhenrichtung H verändert wird.

Jede der Sensoreinrichtungen 3, 5 ist zwischen einem Ende 71 bzw. 73 und der Mitte 72 der Blattfeder 70 angeordnet. Dadurch lässt sich jede der Sensoreinrichtungen 3, 5 unabhängig von der anderen Sensoreinrichtung 5, 3 justieren. Gleichzeitig ist jede Sensoreinrichtung 3, 5 an einem festgelegten Ort platziert, da die Blattfeder einen elastischen Vorsprung aufweist. Die Blattfeder 70 fungiert hier als Trägerelement zur Befestigung der Sensoreinrichtung 3, 5.

Der in Fig. 7 gezeigte Abtastkopf 1 ist auch für eine axiale Messung anwendbar. Bei einer axialen Messung wird nicht an einer Außen- oder Innenfläche einer Welle, sondern an einer Stirnfläche der Welle gemessen. Die beiden Sensorflächen 4, 6 tasten eine Maßverkörperung beispielsweise in Form einer Codespur ab, die auf der Stirnfläche angeordnet ist (nicht gezeigt). Die beiden Sensorflächen 4, 6 zeigen zu der Stirnfläche hin. Sie erstrecken sich entlang einer Radialrichtung der Welle und in einer Richtung, die tangential zur Bewegungsrichtung der Rotation eines Punktes auf der Stirnfläche der Welle verläuft. Sie liegen also parallel zu der Stirnfläche der Welle.

In einer weiteren Variante der axialen Messung tastet die erste Sensoreinrichtung eine fein aufgelöste Maßverkörperung ab. Die zweite Sensoreinrichtung tastet die fein aufgelöste Maßverkörperung und eine grob aufgelöste Maßverkörperung ab. Dazu ist sie in der Radialrichtung gemessen breiter als die erste Sensoreinrichtung. Sie kann eine breite oder zwei schmalere Sensorflächen aufweisen (nicht gezeigt).

In Fig. 8 ist der Abtastkopf 1 aus Fig. 7 dargestellt, wobei er in Fig. 8 zur Messung bzw. Abtastung einer Innenfläche einer Hohlwelle eingestellt ist. Die Enden 71, 73 der Blattfeder 70 sind entlang der Höhenrichtung H weiter zum Gehäuse geschoben als in Fig. 8, so dass die Sensoreinrichtungen 3, 5 an deren äußeren Enden am Gehäuse 2 anliegen. Im mittleren Bereich 72 ist die Blattfeder 70 vom Gehäuse 2 des eines Beabstandungselementes 76 beabstandet. Dieses Beabstandungselement kann beispielsweise variabel ausgestaltet sein, so dass eine Befestigung der Blattfeder 70 in variablen Abständen vom Gehäuse 2 möglich ist.

Die Dicke der Blattfeder 70 und damit ihre Härte sollte so gewählt werden, dass eine Verformung noch möglich ist, ein unnötiges Schwingverhalten der Feder und der darauf angebrachten Sensoreinrichtungen 3, 5 jedoch weitgehend unterdrückt ist.

Auch bei dem Abtastkopf 1 aus den Figuren 7 und 8 sind die Sensorflächen 4, 6 einer Stirnseite 40 des Gehäuses 2 vorgelagert. Die Sensoreinrichtungen 3, 5 befinden sich wieder zwischen den Sensorflächen 4, 6 und der Stirnseite 40. Die Sensoreinrichtungen 3, 5 sind wieder separate Bauteile und befinden sich vollständig vor der Stirnseite 40.

Auch die Sensoreinrichtungen 3, 5 aus den Figuren 7 und 8 sind drehbar. Anders als bei den vorherigen Ausgestaltungen ist die Drehachse jedoch nicht an einer Achse 7 oder 37 fixiert. Vielmehr bewegt sich die Drehachse, um die die Sensoreinrichtungen 3, 5 rotiert werden, während der Bewegung.

Wie in den Figuren 7 und 8 gezeigt, kann die Blattfeder 70 in verschiedenen Stellungen fixierbar am Gehäuse 2 befestigt sein.

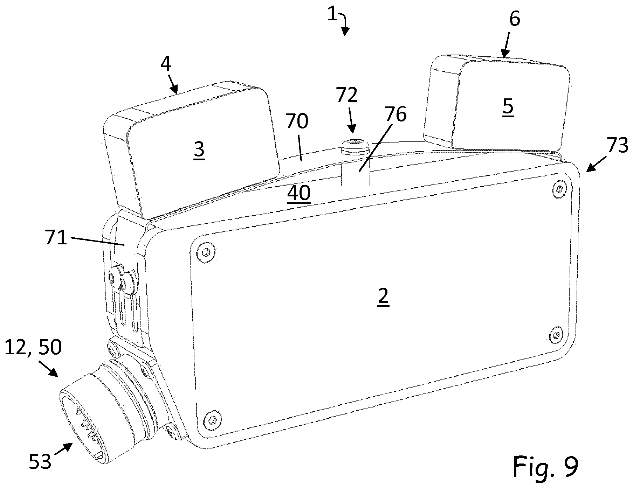

In Fig. 9 ist ein Abtastkopf 1 zu sehen, der den Abtastkopf aus den Figuren 7 und 8 ähnelt. Im Gegensatz zu dem Abtastkopf aus den Figuren 7 und 8 weist ein Steckergesicht 53 eines Anschlusselementes 50 dabei jedoch schräg von einer Stirnseite 40 des Gehäuses 2 weg. Dies ermöglicht eine kompaktere Ausgestaltung als eine Ausführungsform, bei der das Steckergesicht 53 in die Längsrichtung L weist, in der auch die Stirnseite 40 verläuft.

## Patentansprüche

1. Abtastkopf (1) für einen Geber zur Erfassung von Lage- und/oder Bewegungsparametern, wie zum Beispiel Position, Geschwindigkeit und Beschleunigung, umfassend ein Gehäuse (2) mit einer Stirnseite (40), eine erste, am Gehäuse (2) angeordnete Sensoreinrichtung (3) mit einer ersten Sensorfläche (4), die zumindest teilweise in dieselbe Richtung weist wie die Stirnseite (40), und eine zweite, am Gehäuse (2) versetzt angeordnete Sensoreinrichtung (5) mit einer zweiten Sensorfläche (6), die ebenfalls zumindest teilweise in dieselbe Richtung weist wie die Stirnseite (40), wobei die erste und die zweite Sensoreinrichtung (3, 5) in mindestens zwei unterschiedlichen Winkelstellungen der Sensorflächen (4, 6) zueinander am Gehäuse (2) anordenbar sind und die Sensorflächen (4, 6) der Stirnseite (40) vorgelagert sind, wobei sich die Sensoreinrichtungen (3, 5) zwischen den Sensorflächen (4, 6) und der Stirnseite (40) befinden, wobei die Sensoreinrichtungen (3, 5) separate Bauteile sind und sich vollständig vor der Stirnseite (40) befinden und wenigstens eine Sensoreinrichtung (3,5) drehbar am Gehäuse (2) angeordnet, angebracht oder befestigt ist um die zwei unterschiedlichen Winkelstellungen der Sensorflächen (4, 6) zu ermöglichten.

2. Abtastkopf (1) nach Anspruch 1, **dadurch gekennzeichnet, dass** die wenigstens eine Sensoreinrichtung (3,5) schwenkbar am Gehäuse (2) angeordnet, angebracht oder befestigt ist.

3. Abtastkopf (1) nach einem der vorhergehenden Ansprüche, **dadurch gekennzeichnet, dass** die Sensoreinrichtungen (3, 5) jeweils um eine Drehachse (30) drehbar sind und sich die Drehachsen (30) der Sensoreinrichtungen (3, 5) an den die Sensorflächen (4, 6) bildenden Seiten (34, 36) der Sensoreinrichtungen (3, 5) befinden.

4. Abtastkopf (1) nach einem der vorhergehenden Ansprüche, **dadurch gekennzeichnet, dass** die Sensoreinrichtungen (3, 5) jeweils um eine Drehachse (30) drehbar sind und die Drehachsen (30) außerhalb des Gehäuses (2) liegen.

5. Abtastkopf (1) nach einem der vorhergehenden Ansprüche, **dadurch gekennzeichnet, dass** die Sensoreinrichtungen (3, 5) jeweils um eine Drehachse (30) drehbar sind und die Drehachsen (30) an oder vor der Stirnseite (40) des Gehäuses (2) liegen.

6. Abtastkopf (1) nach einem der vorhergehenden Ansprüche, **dadurch gekennzeichnet, dass** eine auf die beiden Sensoreinrichtungen (3, 5) gleichzeitig einwirkende Feststelleinrichtung (33) vorhanden ist, durch die die Winkelstellungen der beiden Sensoreinrichtungen (3, 5) fixierbar sind.

7. Abtastkopf (1) nach Anspruch 6, **dadurch gekennzeichnet, dass** die Feststelleinrichtung (33) wenigstens zwei Klemmelemente (35) aufweist, zwischen denen wenigstens eine der Sensoreinrichtungen (3, 5) angeordnet ist.

8. Abtastkopf (1) nach einem der vorhergehenden Ansprüche, **dadurch gekennzeichnet, dass** jeweils eine schlitzförmige Ausnehmung (8) an den Sensoreinrichtungen (3, 5) vorgesehen ist, so dass die Sensoreinrichtungen (3, 5) innerhalb eines kontinuierlichen Bereichs schwenkbar sind.

9. Abtastkopf (1) nach einem der vorhergehenden Ansprüche, **dadurch gekennzeichnet, dass** der Abtastkopf (1), abgesehen von einem Anschlusselement (50), im Wesentlichen eine zweizählige Rotationssymmetrie aufweist.

10. Abtastkopf (1) nach nach einem der vorhergehenden Ansprüche, **dadurch gekennzeichnet, dass** die Sensoreinrichtungen (3, 5) und/oder das Gehäuse (2) und/oder die Klemmelemente (35) Ausrichthilfen in Form von außen einsehbaren Markierungen aufweisen, wobei jeder Markierung eine vorbestimmte Winkelstellung der Sensoreinrichtungen (3, 5) zugeordnet ist.

11. Abtastkopf (1) nach einem der vorhergehenden Ansprüche, **dadurch gekennzeichnet, dass** die Sensoreinrichtungen (3, 5) an einer Blattfeder (70) angeordnet sind, die an mindestens zwei Befestigungsstellen am Gehäuse (2) befestigt sind.

12. Abtastkopf (1) nach Anspruch 11, **dadurch gekennzeichnet, dass** die Blattfeder (70) an ihren Enden (71, 73) und an ihrer Mitte (72) am Gehäuse (2) befestigt ist und je eine Sensoreinrichtung (3, 5) zwischen einem Ende (71, 73) und der Mitte (72) angeordnet ist.

13. Abtastkopf (1) nach einem der Ansprüche 11 oder 12, **dadurch gekennzeichnet, dass** die Blattfeder (70) in verschieden durchgebogenen Stellungen fixierbar am Gehäuse (2) befestigt ist.

14. Abtastkopf (1) nach einem der vorhergehenden Ansprüche, **dadurch gekennzeichnet, dass** ein elektrisches Anschlusselement (50) mit einem schräg von der Stirnseite (40) wegweisenden Steckergesicht (53) versehen ist.

15. Abtastkopf (1) nach einem der vorhergehenden Ansprüche, **dadurch gekennzeichnet, dass** die Sensorflächen (4, 6) der Stirnfläche des drehbaren Bauelementes (13) gegenüberliegend angeordnet sind und von den Sensorflächen (4, 6) eine an der Stirnfläche vorgesehene Massverkörperung (16) erfassbar ist.

## Claims

1. Sensor head (1) for an encoder for the acquisition of position and/or movement parameters such as position, speed and acceleration, comprising a housing (2) with a front face (40), a first sensor device (3) positioned on the housing (2) with a first sensor surface (4), which at least partially points in the same direction as the front face (40), and a second sensor device (5) positioned in an offset location on the housing (2) with a second sensor surface (6) which also at least partially points in the same direction as the front face (40), whereby the first and second sensor devices (3, 5) can be positioned in at least two different angles of the sensor surfaces (4, 6) with respect to each other on the housing (2), and the sensor surfaces (4, 6) of the front face (40) are projecting forwards, whereby the sensor devices (3, 5) are located between the sensor surfaces (4, 6) and the front face (40), whereby the sensor devices (3, 5) are separate components and are fully located in front of the front face (40), and at least one sensor device (3, 5) is rotatably positioned, mounted or secured on the housing (2) in order to permit the two different angles of the sensor surfaces (4, 6).

2. Sensor head (1) in accordance with Claim 1, **characterized in that** the at least one sensor device (3, 5) is positioned, mounted or secured on the housing (2) in such a way that it can swivel.

3. Sensor head (1) in accordance with any of the preceding Claims, **characterized in that** the sensor devices (3, 5) are each rotatable around a rotary axis (30) and the rotary axes (30) of the sensor devices (3, 5) are located on the sides (34, 36) of the sensor devices (3, 5) forming the sensor surfaces (4, 6).

4. Sensor head (1) in accordance with any of the preceding Claims, **characterized in that** the sensor devices (3, 5) are each rotatable around a rotary axis (30) and the rotary axes (30) are located outside the housing (2).

5. Sensor head (1) in accordance with any of the preceding Claims, **characterized in that** the sensor devices (3, 5) are each rotatable around a rotary axis (30) and the rotary axes (30) are located on or in front of the front face (40) of the housing (2).

6. Sensor head (1) in accordance with any of the preceding Claims, **characterized in that** there is a locking device (33) acting simultaneously on the two sensor devices (3, 5), by means of which the angle positions of the two sensor devices (3, 5) can be fixed.

7. Sensor head (1) in accordance with Claim 6, **characterized in that** the locking device (33) has at least two clamping elements (35), between which at least one of the sensor devices (3, 5) is located.

8. Sensor head (1) in accordance with any of the preceding Claims, **characterized in that** each of the sensor devices (3, 5) has a slotted recess (8), so that the sensor devices (3, 5) can be swiveled within a continuous range.

9. Sensor head (1) in accordance with any of the preceding Claims, **characterized in that** the sensor head (1), apart from a connection element (50), essentially has twofold rotational symmetry.

10. Sensor head (1) in accordance with any of the preceding Claims, **characterized in that** the sensor devices (3, 5) and/or the housing (2) and/or the clamping elements (35) have alignment aids in the form of externally visible marks, whereby each mark is assigned a predetermined angular position of the sensor devices (3, 5).

11. Sensor head (1) in accordance with any of the preceding Claims, **characterized in that** the sensor devices (3, 5) are located on a leaf spring (70) which is secured on at least two mounting points on the housing (2).

12. Sensor head (1) in accordance with Claim 11, **characterized in that** the leaf spring (70) is attached to the housing (2) at its ends (71, 73) and in its center (72) and that one sensor device (3, 5) each is located between one end (71, 73) and the center (72).

13. Sensor head (1) in accordance with one of Claims 11 or 12, **characterized in that** the leaf spring (70) is attached to the housing (2) in such a way that it can be fixed in differently bent positions.

14. Sensor head (1) in accordance with any of the preceding Claims, **characterized in that** an electrical connecting element (50) is fitted with a pin arrangement (53) facing diagonally away from the front face (40).

15. Sensor head (1) in accordance with any of the preceding Claims, **characterized in that** the sensor surfaces (4, 6) are located opposite the front surface of the rotatable component part (13) and that a dimensional scale (16) provided on the front surface can be detected by the sensor surfaces (4, 6).

## Revendications

1. Tête de détection (1) d'un codeur pour détection de paramètre de situation et/ou de mouvement, comme par exemple la position, la vitesse et l'accélération, entourée d'un boîtier (2) avec une face avant (40), un premier système de capteur (3) disposé sur le boîtier (2) avec une première surface de détecteur (4) dirigée du moins partiellement dans le même sens que la face avant (40), et un second système de capteur (5) disposé de manière décalée sur le boîtier (2) avec une seconde surface de détecteur (6), dirigée aussi du moins partiellement dans le même sens que la face avant (40), le premier et le second système de capteur (3, 5) pouvant être disposés dans au moins deux positions angulaires différentes des surfaces des détecteurs (4, 6) l'une par rapport à l'autre sur le boîtier (2) et les surfaces de détecteurs (4, 6) étant placées devant la face avant (40), les systèmes de capteurs (3, 5) se trouvant entre les surfaces des détecteurs (4, 6) et la face avant (40), les systèmes de capteurs (3, 5) étant des composants séparés et se trouvant entièrement devant la face avant (40) et au moins un système de capteur (3, 5) étant disposé, apposé ou fixé de manière orientable sur le boîtier (2) afin de permettre les deux positions angulaires différentes des surfaces des détecteurs (4, 6).

2. Tête de détection (1) selon la revendication 1, **caractérisée en ce sens** qu'au moins l'un des systèmes de capteurs (3, 5) est disposé, apposé ou fixé de manière orientable sur le boîtier (2).

3. Tête de détection (1) selon une des revendications précédentes, **caractérisée en ce sens** que les systèmes de capteurs (3, 5) sont respectivement orientables sur un axe de rotation (30) et que les axes de rotation (30) des systèmes de capteurs (3, 5) se trouvent sur les côtés (34, 36) formant les surfaces des détecteurs (4, 6) des systèmes de capteurs (3, 5).

4. Tête de détection (1) selon une des revendications précédentes, **caractérisée en ce sens** que les systèmes de capteurs (3,5) sont respectivement orientables sur un axe de rotation (30) et que les axes de rotation (30) se trouvent à l'extérieur du boîtier (2).

5. Tête de détection (1) selon une des revendications précédentes, **caractérisée en ce sens** que les systèmes de capteurs (3, 5) sont respectivement orientables sur un axe de rotation (30) et que les axes de rotation (30) se trouvent sur ou devant la face avant (40) du boîtier (2).

6. Tête de détection (1) selon une des revendications précédentes, **caractérisée en ce sens** qu'il est prévu un dispositif d'arrêt (33) agissant simultanément sur les deux systèmes de capteurs (3, 5), dispositif par le biais duquel les positions angulaires des deux systèmes de capteurs (3, 5) peuvent être fixées.

7. Tête de détection (1) selon la revendication 6, **caractérisée en ce sens** que le dispositif d'arrêt (33) présente au mois deux éléments de blocage (35) entre lesquels est disposé au moins un des systèmes de capteurs (3, 5).

8. Tête de détection (1) selon une des revendications précédentes, **caractérisée en ce sens** qu'il est respectivement prévu une cavité (8) en forme de fente sur les systèmes de capteurs (3, 5) de sorte que les systèmes de capteurs (3, 5) puisse être orientés au sein d'une plage continue.

9. Tête de détection (1) selon une des revendications précédentes, **caractérisée en ce sens** que la tête de détection (1), mis à part un élément de raccordement (50), présente pour l'essentiel une symétrie en rotation binaire.

10. Tête de détection (1) selon une des revendications précédentes, **caractérisée en ce sens** que les systèmes de capteurs (3, 5) et/ ou le boîtier (2) et / ou les éléments de blocage (35) présentent des aides à l'alignement sous forme de repères visibles de l'extérieur, chaque repère étant associé à une position angulaire des systèmes de capteurs prédéterminée (3, 5).

11. Tête de détection (1) selon une des revendications précédentes, **caractérisée en ce sens** que les systèmes de capteurs (3, 5) sont disposés sur un ressort à lame (70) lequel est fixé au boîtier (2) en au moins deux points de fixation.

12. Tête de détection (1) selon la revendication 11, **caractérisée en ce sens** que le ressort à lame (70) est fixé au boîtier (2) à ses deux extrémités (71, 73) et en son milieu (72) et que respectivement un système de capteur (3,5) est disposé entre une extrémité (71,73) et le milieu (72).

13. Tête de détection (1) selon la revendication 11 ou 12, **caractérisée en ce sens** que le ressort à lame (70) est peut être fixé au boîtier (2) en différentes positions bombées.

14. Tête de détection (1) selon une des revendications précédents, **caractérisée en ce sens** qu'un élément de raccordement électrique (50) est doté d'un connecteur à configuration spéciale (53) partant en diagonale à l'opposé de la face avant (40).

15. Tête de détection (1) selon une des revendications précédents, **caractérisée en ce sens** que les surfaces des détecteurs (4, 6) de la face avant du composant (13) orientable sont disposés à l'opposé et que, depuis les surfaces des détecteurs (4, 6), un étalon (16) prévu sur la face frontale peut être détecté.
